# FASCICULE DE BREVET EUROPEEN

(11) **EP 0 393 364 B1**
(45) Date de publication et mention de la délivrance du brevet: **06.10.1993**
(21) Numéro de dépôt: 90105158.1
(22) Date de dépôt: 19.03.1990
(51) Int. Cl.: A61C 1/08

(54) **Pièce à main dentaire**
Zahnärztliches Handstück
Dental handpiece

(30) Priorité: 20.04.1989 CH 1502/89
(43) Date de publication de la demande: 24.10.1990
(73) Titulaire: BIEN-AIR SA, CH-2500 Bienne 6 (CH)
(72) Inventeur: Mosimann, David, CH-2503 Bienne (CH)
(74) Mandataire: Finck, Dieter, Dr.Ing.

(56) Documents cités:
- GB-A- 2 118 836

## Description

La présente invention concerne une pièce à main dentaire, plus particulièrement les moyens de liaison permettant de relier la pièce à main à un conduit d'alimentation.

Les pièces à main dentaires conventionnelles comprennent une tête dans laquelle est fixé un outil de travail, un manche fait d'une seule pièce et par lequel le praticien tient la pièce à main, et un moteur disposé à l'intérieur de la pièce à main pour entraîner l'outil. Le manche comporte deux extrémités opposées, une extrémité supportant la tête, et l'autre extrémité recevant des fluides (air, eau) et des courants électriques d'un conduit d'alimentation présentant une configuration donnée, ces fluides et ces courants étant nécessaires pour entraîner le moteur, éventuellement pour éclairer, rincer et sécher la plage de travail.

La liaison entre la pièce à main et le conduit d'alimentation présente certaines difficultés, la place disponible étant limitée. Chaque fabricant surmonte ces difficultés de manière qui lui est propre. Il en résulte qu'il n'y a aucune normalisation en ce qui concerne la configuration de la partie du conduit d'alimentation venant se fixer sur le manche.

Bien entendu si la pièce à main et le conduit d'alimentation proviennent du même fabricant, leur assemblage ne pose aucune difficulté. Mais il arrive fréquemment que le praticien se trouve dans l'obligation d'utiliser une pièce à main produite par un autre fabricant que celui qui a fourni le conduit d'alimentation. Etant donné l'absence de toute normalisation, le raccord de cette pièce à main au conduit est alors impossible.

Une pièce à main formée de deux parties séparables longitudinalement a été décrite dans le document GB 2118 836. Dans cette réalisation, une partie supporte la tête, alors que l'autre, qui constitue la partie principale, forme le manche dont l'extrémité libre est agencée pour recevoir un conduit d'alimentation de configuration donnée. Dans la partie principale, qui est la pièce la plus complexe et la plus coûteuse de la pièce à main, sont disposés les organes principaux de celle-ci, tels que le moteur et l'engrenage réducteur qui lui est accouplé. La séparation des deux parties permet le remplacement aisé de ces organes par d'autres présentant des caractéristiques différentes, cette possibilité de modifier la pièce à main constituant le but de l'invention. Si la pièce à main devait être reliée à un conduit d'alimentation différent de celui prévu à l'origine, il serait en principe possible de remplacer la partie principale par une autre s'adaptant sur le nouveau conduit. Cette façon de procéder serait cependant peu économique car le remplacement de la partie principale, qui est aussi la plus chère, équivaudrait pratiquement au remplacement de la pièce à main complète, comme dans le cas des pièces à main conventionnelles.

Pour résoudre ce problème de raccordement, les fabricants sont ainsi amenés à produire chacun de leur modèle de pièce à main en plusieurs exécutions, chaque exécution étant compatible avec un des conduits d'alimentation existant sur le marché. Cette solution peu rationnelle, si elle résoud techniquement le problème, présente l'inconvénient, en obligeant le fabricant de produire une grande variété de pièces à main différentes, d'augmenter le prix de revient de ces pièces.

La présente invention a pour but de pallier cet inconvénient en proposant une pièce à main dentaire en deux parties de fabrication économique et pouvant être facilement adaptée à tout type de conduit d'alimentation.

Pour atteindre cet objectif, la pièce à main dentaire selon l'invention, comprenant un manche sensiblement tubulaire et comportant deux extrémités opposées, une tête fixée à une extrémité du manche et destinée à supporter un outil de travail, et un moteur pour entraîner l'outil, disposés à l'intérieur du manche et/ou de la tête et utilisant au moins un fluide et/ou un courant électrique provenant d'un conduit d'alimentation amovible de configuration donnée, est particulièrement remarquable en ce que sur l'autre extrémité du manche est fixée une extrémité d'un manchon adaptateur comportant deux extrémités dont l'autre extrémité est agencée pour être raccordée au conduit d'alimentation, le manchon comportant des moyens pour assurer le passage du fluide et/ou du courant entre le conduit et les organes disposés dans le manche et/ou la tête.

D'autres caractéristiques et avantages de l'invention ressortiront de la description qui va suivre, faite en regard du dessin annexé et donnant, à titre d'exemple explicatif mais nullement limitatif, une forme avantageuse de réalisation d'une telle pièce à main. Sur ce dessin, où les mêmes références se rapportent à des éléments analogues :
- la fig. 1 est une vue de profil représentant une pièce à main dentaire conventionnelle raccordée à un conduit d'alimentation; et
- la fig. 2 est une vue en perspective montrant les principaux éléments constitutifs d'une forme de réalisation de la pièce à main selon l'invention, et la façon dont cette pièce est reliée au conduit d'alimentation.

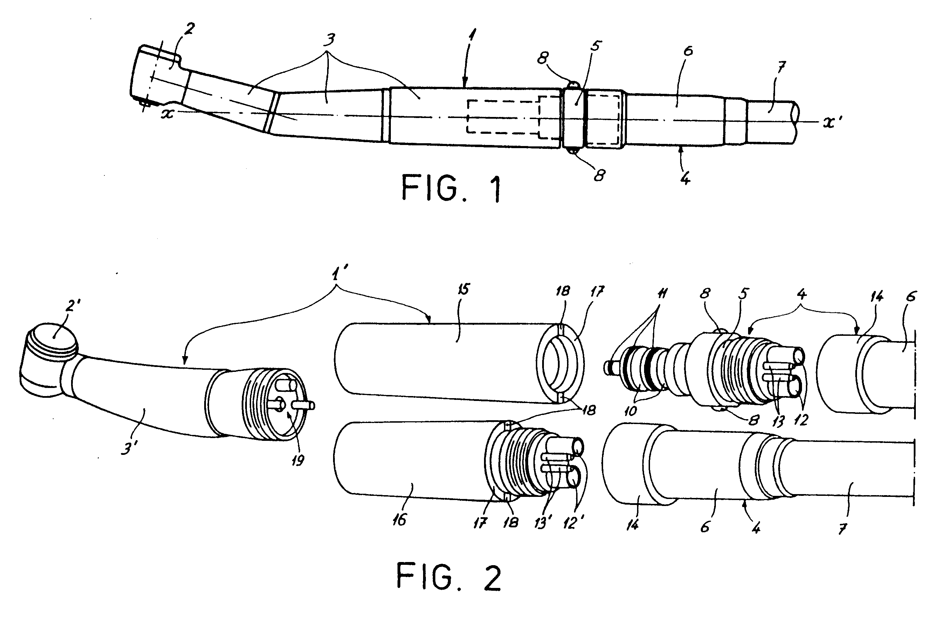

Sur la fig. 1 la référence 1 désigne une pièce à main dentaire conventionnelle. Cette pièce à main comprend essentiellement une tête 2, et un manche 3 comportant, dans cet exemple, trois éléments tubulaires reliés rigidement les uns aux autres par leurs extrémités. La tête est fixée à une extrémité du manche et elle a pour fonction de supporter un outil de travail non représenté, cet outil pouvant être, par exemple, une fraise ou un racloir de détartrage. L'outil est mis en mouvement par un moteur disposé dans la tête ou dans une partie du manche. Dans le cas d'une fraise, le moteur, placé dans la tête 2, est une turbine à air ou un moteur électrique. Par contre, s'il s'agit d'un racloir, le moteur est constitué par un vibreur piézo-électrique qui est alors fixé dans le manche. La pièce à main comporte en outre généralement un gicleur pour l'eau de rinçage, une buse pour l'air de séchage, et une lampe électrique pour éclairer la plage de travail.

L'autre extrémité du manche 3 est agencée pour recevoir un conduit d'alimentation amovible 4 formé, dans le cas présent, des éléments référencés 5, 6 et 7. Le conduit est destiné à approvisionner la pièce à main, à partir d'un appareil d'alimentation et au moyen de tuyaux et de fils électriques non représentés, en fluides (air, eau) et en courants nécessaires à son fonctionmement. Suivant le type de pièce à main, le conduit d'alimentation lui fournira ainsi au moins un fluide, par exemple de l'air sous pression pour la turbine, ou au moins un courant, celui nécessaire au vibreur, mais en général il fournira à la pièce à main aussi bien de l'air, de l'eau, qu'un ou deux courants électriques.

L'extrémité du conduit d'alimentation 4 comporte un raccord rotatif rapide 5, ce raccord de forme cylindrique étant montré en perspective sur la fig. 2. Une extrémité du raccord pénètre dans le manche 3 où elle est retenue par un dispositif de verrouillage non représenté. Deux boutons 8 permettent de commander ce verrouillage pour séparer rapidement les deux pièces l'une de l'autre. Cette extrémité comporte en outre des canaux radiaux 10 pour les fluides et des contacts annulaires 11 pour les courants venant coopérer avec des canaux et des contacts correspondants non représentés du manche, ceci de manière à permettre à la pièce à main et au raccord de pivoter, l'un par rapport à l'autre, autour d'un axe de symétrie commun xx', tout en assurant le passage des fluides et des courants.

L'autre extrémité du raccord 5 comporte des canaux 12 et des contacts 13 disposés axialement. Cette extrémité est engagée dans une prise 6 qui comprend des canaux et des contacts non représentés prévus pour recevoir ceux du raccord. La prise comporte en outre une bague extérieure filetée 14, cette bague étant vissée sur le raccord 5 pour le maintenir rigidement dans la prise.

Enfin la prise 6 est raccordée de manière inamovible à un tube souple 7 contenant des tuyaux et des conducteurs flexibles destinés à transporter les fluides et les courants, fournis par l'appareil d'alimentation, jusqu'à l'extrémité de cette prise.

La réalisation qui vient d'être décrite montre qu'une pièce à main 1 donnée ne peut être raccordée qu'au conduit d'alimentation 4 pour lequel elle a été prévue. Or chaque fabricant a sa propre exécution de conduit, celle-ci pouvant encore changer au cours du temps pour s'adapter à l'évolution de la technique. Par ailleurs le conduit d'alimentation ne comporte pas toujours de raccord rotatif rapide 5, la pièce à main étant alors directement fixée sur la prise 6. Pour qu'un modèle de pièce à main produit par un fabricant puisse dans ces conditions s'adapter à toutes ces variantes, ce modèle doit comporter des exécutions différentes, chaque exécution acceptant un conduit d'alimentation particulier.

Ceci constitue une difficulté importante que la présente invention permet de surmonter grâce à la pièce à main 1' représentée en perspective sur la fig. 2. Cette pièce à main comprend une tête 2' identique à la tête 2, et un manche 3' similaire au manche 3, la tête 2' étant fixée à une extrémité du manche 3'. L'autre extrémité du manche 3' est raccordée à une extrémité d'un manchon adaptateur cylindrique 15, et non, comme précédemment, au conduit d'alimentation 4. La fixation du manchon 15 est obtenue, par exemple, au moyen d'un tube extérieur fileté 17, solidaire du manchon et comportant deux fentes radiales 18, ces fentes permettant de visser le tube sur le manche 3' à l'aide d'une clé. Le manchon 15 est par ailleurs agencé de manière que son autre extrémité, correspondant à l'autre extrémité du manche 3, puisse recevoir le conduit d'alimentation 4, c'est-à-dire dans le cas présent le raccord 5. Bien entendu le manchon 15 comporte des moyens pour transférer les fluides et les courants du raccord 5 à des canaux et des contacts 19 disposés sur l'autre extrémité du manche 3'. Ces moyens ne seront cependant pas décrits car ils sont semblables à ceux, bien connus, utilisés dans les manches de pièces à main conventionnelles.

En remarquant que le manche 3' et le tube 17 présentent sensiblement le même diamètre extérieur, il apparaît que la pièce à main 1' selon l'invention, formée des éléments 2', 3' et 15, ne se distingue guère, ni pas son aspect ni par sa fonction, de la pièce à main conventionnelle 1.

A la place du manchon 15, un autre manchon adaptateur aurait pu être fixé sur le manche 3', comme par exemple celui représenté sur la fig. 2 et portant la référence 16, pour permettre de relier la pièce à main 1' à un conduit d'alimentation 4 présentant une autre configuration que celle de l'extrémité du raccord 5 qui comporte les canaux 10 et les contacts 11.

Le manchon 16 a une structure générale semblable à celle du manchon 15, le mode de fixation d'une extrémité du manchon 16 sur le manche 3', au moyen d'un tube 17, étant en particulier le même que celui du manchon 15. L'autre extrémité du manchon 16 est par contre prévue pour entrer dans la prise 6. Cette extrémité se présente ainsi sous le même aspect que l'extrémité du raccord 5 venant coopérer avec la prise 6, en particulier le manchon comporte des canaux 12' pour les fluides et des contacts 13' pour les courants identiques aux canaux 12 et aux contacts 13 du raccord.

Pour chaque type de conduit d'alimentation 4 il est donc possible de réaliser un manchon adaptateur particulier, ce manchon venant se fixer sur le manche 3' de la même manière que le manchon 15.

Par rapport à une pièce à main conventionnelle 1, la pièce à main 1' selon l'invention comporte un élément supplémentaire, c'est-à-dire le manchon adaptateur. C'est un désavantage, mais qui n'est qu'apparent car le manchon est simple et bon marché, alors que l'ensemble comprenant la tête 2' et le manche 3' est une pièce de précision complexe et chère. Pour le fabricant il est évidemment plus rationnel et économique de produire en grande série des ensembles, tous identiques, formés de la tête 2' et du manche 3', et divers manchons adaptateurs, puis de les assembler en fonction des nécessités, que de produire en petites séries des versions différentes d'une même pièce à main complète.

Il va de soi que la pièce à main 1' qui vient d'être décrite peut subir différentes modifications et se présenter sous d'autres variantes, évidentes à l'homme du métier, sans sortir du cadre de la présente invention. En particulier, le mode de fixation du manchon adapteur 15, 16 sur le manche 3' pourrait être conçu différemment, par exemple de manière que le manchon ne puisse pas être mis et enlevé par l'utilisateur, ou au contraire que l'utilisateur puisse fixer sans difficulté le manchon qui lui convient.

## Revendications

1. Pièce à main dentaire comprenant un manche (3') de forme sensiblement tubulaire et comportant deux extrémités opposées, une tête (2') fixée à une extrémité dudit manche et destinée à supporter un outil de travail, et un moteur pour entraîner l'outil, disposés à l'intérieur du manche et/ou de la tête et utilisant au moins un fluide et/ou un courant électrique provenant d'un conduit d'alimentation amovible (4) de configuration donnée, caractérisée en ce que sur ladite autre extrémité du manche (3') est fixée une extrémité d'un manchon adaptateur (15; 16) comportant deux extrémités et dont l'autre extrémité est agencée pour être raccordée audit conduit (4), ledit manchon comportant des moyens (12', 13') pour assurer le passage dudit fluide ou/et dudit courant entre le conduit et le manche.

2. Pièce à main dentaire selon la revendication 1, caractérisée en ce que ledit manchon (15; 16) est fixé de manière amovible sur ladite autre extrémité du manchon (3').

3. Pièce à main dentaire selon la revendication 1 ou 2, caractérisée en ce que ledit manchon (15; 16) comporte un tube extérieur (17) fileté venant se visser sur ladite autre extrémité du manche (3') afin de rendre le manchon et le manche solidaires l'un de l'autre.

## Claims

1. Dental handpiece comprising a stem (3') of substantially tubular shape having two opposing ends, a head (2') fixed to one end of said stem and destined to support a work tool, and a motor for driving the tool disposed within the stem and/or the head, and using at least a fluid and/or an electric current coming from a removable feeding conduct (4) of given configuration, characterized in that to said other end of the stem (3') one end of an adaptive sleeve (15; 16) having two ends is fixed, the other end of which is provided for being connected to said conduct (4), said sleeve comprising means (12', 13') for securing the passage of said fluid or/and said current between the conduct and the stem.

2. Dental handpiece according to claim 1, characterized in that said sleeve (15; 16) is fixed in removable manner to said other end of the stem (3').

3. Dental handpiece according to claim 1 or 2, characterized in that said sleeve (15; 16) comprises an exterior threaded tube (17) screwed to said other end of the stem (3') so that the sleeve and the stem are rendered into one piece.

## Patentansprüche

1. Zahnärztliches Handinstrument, das einen im wesentlichen rohrförmigen Stiel (3') mit zwei gegenüberliegenden Enden, einen an einem Ende des Stiels befestigten Kopf (2'), der dazu bestimmt ist, ein Arbeitswerkzeug zu tragen, und einen im Inneren des Stiels und/oder des Kopfes angeordneten Motor zum Antreiben des Werkzeugs aufweist und wenigstens ein Fluid und/oder einen elektrischen Strom verwendet, der aus einer abnehmbaren Zuführleitung (4) mit gegebener Ausgestaltung kommt, dadurch gekennzeichnet, daß auf dem anderen Ende des Stiels (3') ein Ende einer zwei Enden aufweisenden Anpaßmuffe (15; 16) befestigt ist, deren anderes Ende für eine Verbindung mit der Leitung (4) vorgesehen ist, wobei die Muffe Einrichtungen (12', 13') zur Gewährleistung des Durchgangs des Fluids oder/und des Stroms zwischen der Leitung und dem Stiel aufweist.

2. Zahnärztliches Handinstrument nach Anspruch 1, dadurch gekennzeichnet, daß die Muffe (15; 16) abnehmbar auf dem anderen Ende des Stiels (3') befestigt ist.

3. Zahnärztliches Handinstrument nach Anspruch 1 oder 2, dadurch gekennzeichnet, daß die Muffe (15; 16) ein äußeres Gewinderohr (17) aufweist, das auf das andere Ende des Stiels (3') geschraubt ist, um die Muffe und den Stiel zu einem Stück zu verbinden.
